# EUROPÄISCHE PATENTSCHRIFT

(11) **EP 0 366 026 B1**
(45) Veröffentlichungstag und Bekanntmachung des Hinweises auf die Patenterteilung: **14.04.1993**
(21) Anmeldenummer: 89119564.6
(22) Anmeldetag: 21.10.1989
(51) Int. Cl.: F16B 13/00, F16B 13/14, B65D 35/14

(54) **Mörtelankersystem**
Mortar anchor system
Système d'ancrage pour mortier

(30) Priorität: 26.10.1988 DE 3836464
(43) Veröffentlichungstag der Anmeldung: 02.05.1990
(73) Patentinhaber: Mächtle GmbH, D-71657 Vaihingen (DE)
(72) Erfinder: Mächtle, Irmgard, D-7015 Korntal-Münchingen 1 (DE); Wöhler, Günther, D-7015 Korntal-Münchingen 1 (DE); Mayer, Joachim, D-7000 Stuttgart 50 (DE)
(74) Vertreter: Raeck, Wilfrid, Dipl.-Ing.

(56) Entgegenhaltungen:
- AT-B- 347 651
- DE-A- 2 110 684
- DE-A- 2 602 433
- GB-A- 1 437 582

## Beschreibung

Die Erfindung betrifft ein Mörtelankersystem zum Befestigen von Bauteilen an einer Leichtbaustoffe enthaltende Wand, bei dem in eine Wandbohrung eine Verankerungseinrichtung für einen Schraubkörper eingeführt ist, die einem am Bohrlocheingang angeordneten Deckelkörper mit einem in die Wandbohrung ragenden Hülsenabschnitt aufweist, dessen im Deckelkörper mündender Eingang eine Kupplung für das Düsenstück eines Mörtel-Auspreßgerätes bildet.

Zur spreizdruckfreien Befestigung von Bauteilen an Baustoffen geringer Festigkeit wie Bims- oder Kalksandsteinen sind sogenannte Injektionsanker bekannt, bei denen vorzugsweise eine Kunststoff-Vergußmasse mittels eines Injektionsgerätes in die vorbereitete Wandbohrung injiziert und diese danach durch einen Stopfen verschlossen wird. Aus Gründen der Lagerfähigkeit wird als Vergußmasse bevorzugt ein Zweikomponenten-Kunststoff benutzt, der erst aushärtet, wenn beide Komponenten in der Wandbohrung zusammengebracht werden. Das Einbringen und das gleichzeitige Mischen der beiden Komponenten ist umständlich und bedingt eine sehr sorgfältige Handhabung, für die jedoch im rauhen Betrieb auf Baustellen im allgemeinen die Voraussetzungen fehlen, so daß Verschmutzungen der Wände und Verankerungsfehler auftreten. Außerdem ist nachteilig, daß solche Vergußmassen oft eine verhältnismäßig lange Reaktions- und Abbindezeit aufweisen.

Bei einem aus der DE-A 2 602 433 bekannten Mörtelankersystem der eingangs bezeichneten Art dient als Verankerungseinrichtung ein in die Wandbohrung eingeführtes, am vorangehenden Ende geschlossenes Kunststoffrohr, auf dem unter Längsabständen zueinander Durchbrüche enthaltende Zentrierflansche sowie ein als Einschiebbegrenzung und Abdichtung der Wandbohrungsmündung wirksamer größerer rückwärtigen Anlageflansch angeordnet sind. Das Auffüllen des Ringraumes zwischen Rohr und Wandbohrung mit Mörtel erfolgt mittels einer Spritzvorrichtung, deren Düse an den Mündungstrichter einer in das Rohr eingeschobenen kurzen Adapterhülse angesetzt wird, die an ihrem vorangehenden Ende geschlossen ist und einen seitlichen radialen Durchbruch enthält, der mit einem entsprechenden Durchlaß nahe dem rückwärtigen Ende des Rohrs zur Fluchtung gebracht werden muß.

Die Anwendung des bekannten Ankersystems erfordert Wandbohrungen mit verhältnismäßig großem Durchmesser, weil nur in diesem Fall die radialen Durchbrüche im Rohr und in der Adapterhülse ausreichend weit sind, damit die Mörtelmasse bis in die Tiefe der Wandbohrung eingepreßt werden und eine haltbare Einzementierung des Rohres vollziehen kann. Die als Kupplung notwendige Adapterhülse ist als Wegwerfteil anzusehen, da sie vor dem Einschrauben eines Schraubkörpers in das im abgebundenen Mörtel festsitzende Kunststoffrohr beseitigt werden muß und dann aufgrund des in ihren Kanälen abbindenden Mörtels verstopft ist.

Im Hinblick auf die kleinen Kanäle und Durchbrüche in Adapterhülse, Rohr und in den Außenflanschen des Rohres kann nur ein dünnflüssiger Kunststoffmörtel verwendet werden. Um die Durchbrüche von Adapterhülse und Rohr zur Fluchtung zu bringen, müssen zwischen beiden wirksame Anschlagmittel vorgesehen und auf der Baustelle zusätzliche Handhabungen ausgeführt werden, um durch Verdrehen der Adapterhülse die Durchbrüche im Rohr zu verschließen und das Zurückfließen des flüssigen Mörtels zu verhindern.

Der Erfindung liegt die Aufgabe zugrunde, ein Mörtelankersystem der eingangs bezeichneten Art vorzugsweise für Verankerungen in Leichtbaustoffen anzugeben, das sich durch große Einfachheit in der Anwendung sowie durch Unabhängigkeit von der Art der Mörtelmasse und ihres Einbringens sowie durch hohe Auszugsfestigkeit auszeichnet.

Erfindungsgemäß wird diese Aufgabe dadurch gelöst, daß das vorangehende Ende des Hülsenabschnittes als Halter für das rückwärtige Ende einer gewundenen Drahtfeder ausgebildet ist, die von einem sich über eine wesentliche Länge der Wandbohrung erstreckenden und zwecks unbehinderter Mörtelausbreitung aufgeweiteten Bereich aus in Richtung auf ihr vorderes Ende verjüngt ist,
und daß der Hülsenabschnitt zur zentrierenden Führung des Schraubkörpers im Bereich des Bohrlocheinganges und das vordere Federende zur Führung und Verbindung mit dem angehenden Ende des Schraubkörpers vorgesehen ist.

Das vorgeschlagene Mörtelankersystem zeichnet sich durch die Verwendung einfacher oder handelsüblicher Einzelteile wie Holzschrauben oder Gewindebolzen sowie durch die mit dem Auspreßgerät portionsweise verfügbare, auf der Baustelle leicht zu handhabende Mörtelmasse, z.B. Zement, aus, während der die Wandbohrung abschließende Deckelkörper mit angeformter Hülse aus einem einstückigen Kunststoffspritzteil besteht und zur Herstellung der gewundenen Drahtfeder, deren vorangehendes Ende als Führung für den Schraubkörper dient, lediglich ein Wickeldorn notwendig ist. In einer zweiten Funktion ist die sich durch alle Durchmesserbereiche der Wandbohrung erstreckende Feder als Bewehrung im Mörtel wirksam, der dadurch eine erhöhte Festigkeit gewinnt und beim Ausbreiten innerhalb der Wandbohrung durch die Feder nicht behindert wird.

Vorteilhaft für eine einfache Montage ist die Steck- oder Schraubverbindung der Drahtfeder mit dem Außenumfang des Hülsenabschnittes, so daß mit dem Deckelkörper gleichzeitig die Armierung in die Wandbohrung eingeführt wird. Zum verbesserten Einführen dienen auch die außen an der Hülse angeformten Ringlamellen, die an der Bohrlochwand schleifen, sich verformen, mit Vorspannung festsetzen und den so zentrierten Deckelkörper am Herausfallen aus der Bohrung hindern. Mit Hilfe des Hülsenabschnitts des Deckelkörpers wird der Schraubkörper zentrisch ausgerichtet und in Richtung auf das verengte Federende geführt. Die an der Verankerung angreifenden Kräfte werden über den Schraubkörper zum Federende in die Tiefe der Bohrung und von dort in die Wand eingeleitet. Der aus Kunststoff bestehende Deckelkörper dient somit zum Ankuppeln des Mörtel-Auspreßgerätes, zum Abdichten der Wandbohrung, zum Zentrieren der Schraube und zur Halterung der Drahtfeder.

Bei einer in den Ansprüchen 9 bis 12 gekennzeichneten Ausführungsform des Mörtelankersystems nach der Erfindung, mit der sich die Auszugsfestigkeit erhöhen läßt, ist das vorangehende Ende des Schraubkörpers und/oder der Drahtfeder mit einem metallischen Kopfteil verbindbar, das einen im wesentlichen dem Wandbohrungsdurchmesser entsprechenden vorderen Ringabschnitt sowie einen im Durchmesser abgesetzten Anschlußabschnitt aufweist. Das Kopfteil kann eine an das vordere Ende der Holzschraube bzw. an das verjüngte Federende angepaßte Aufnahme mit Innengewinde enthalten, während bei einer Variante der Anschlußabschnitt des Kopfteils zusätzlich ein Außengewinde oder Vorsprünge aufweist, auf die das vordere Federende aufgeschraubt oder aufgedrückt wird.

Entsprechend den jeweiligen Montagevoraussetzungen kann es zweckmäßig sein, zur Bauteilbefestigung an der Wand das Mörtelankersystem entweder mit einer Holzschraube anzuwenden oder mit einem Gewindebolzen, der in das Kopfteil eingeschraubt wird, sich durch die Drahtfeder, den Hülsenabschnitt des Deckelkörpers und durch das an der Wand zu befestigende Bauteil erstreckt, das mittels einer Schraubmutter festgezogen wird.

In weiterer Ausgestaltung des Mörtelankersystems nach der Erfindung weist ein Mörtel-Auspreßgerät einen aus einer Schlauchfolie oder einem Weichplastikschlauch bestehenden Außenbehälter auf, der eine erste Komponente einer aus einem Zweikomponentensystem bestehenden Mörtelmasse enthält und an beiden Schlauchenden normalerweise geschlossen ist. Im Außenbehälter ist ein mit der zweiten Komponente gefüllter Innenbehälter angeordnet, der durch äußere Druckeinwirkung z.B. auf eine Sollbruchstelle oder Aufreißnaht soweit zerstörbar ist, daß beide Komponenten innerhalb des Außenbehälters in Verbindung treten und vermischbar sind. Eine Behälterseite enthält eine für den Auspreßvorgang herstellbare Öffnung, die mit dem Eingang des Hülsenabschnittes des Deckelkörpers kuppelbar ist. Ein solches Auspreßgerät läßt sich bequem tragen und an der Baustelle handhaben, wo es zum Mischen der Komponenten der Mörtelmasse und zum portionierten Füllen der Wandbohrung benutzt wird. Um den zubereiteten Mörtel in die Wandbohrung auszupressen, ist die Öffnung des Außenbehälters entweder durch eine an seinem Rand vorgesehene Aufreißnaht gebildet oder besteht aus einem in den Außenbehälter eingeschweißten oder angeformten Öffnungsstutzen, der mit Außengewinde für eine Verschlußkappe versehen sein kann.

Weitere zweckmäßige Ausgestaltungen des Mörtel-Auspreßgerätes ergeben sich aus den Merkmalen der Ansprüche 15 bis 16.

Ausführungsbeispiele des Mörtelankersystems nach der Erfindung sind nachfolgend anhand der Zeichnungen näher erläutert. Es zeigen, jeweils schematisch,
- Fig. 1: einen Teilschnitt durch eine Wandbohrung mit einem Mörtelankersystem nach der Erfindung,
- Fig. 2: einen Schnitt durch einen Deckelkörper,
- Fig. 3: eine Variante des Mörtelankersystems nach Fig. 1,
- Fig. 4a bis 4c: verschiedene Ausführungsformen eines Kopfteils zur Verbindung mit dem Schraubkörper oder der Drahtfeder,
- Fig. 5: eine Ansicht eines Mörtel-Auspreßgerätes mit einer Verschlußklammer,
- Fig. 6: einen an beiden Enden verschweißten Schlauchbehälter,
- Fig. 7: einen teilweise geschnittenen Schlauchbehälter ähnlich Fig. 6 und
- Fig. 8: eine Variante des Schlauchbehälters gemäß Fig. 7.

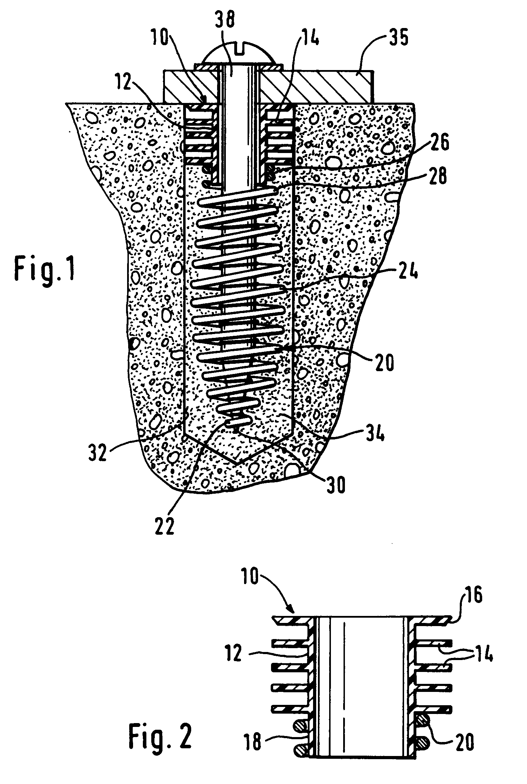

Eine in Fig. 1 im Querschnitt gezeigte Wandbohrung 32 in Leichtbeton-Mauerwerk ist mit Mörtelmasse 34 gefüllt. Der Eingang des Bohrloches ist mittels eines Deckelkörpers 10 abgedichtet, der mit Lamellen oder Flügeln 14 durch Reibung an der Bohrlochwand festgehalten ist. Die Mörtelmasse wird mittels einer Spritzdüse durch die Öffnung eines Hülsenabschnittes 12 des Deckelkörpers 10 eingeführt.

Auf das vorangehende Ende 18 der Hülse 12 ist eine gewundene Drahtfeder 20 aufgesteckt oder aufgeschraubt. Auf dem Umfang des vorderen Endes 18 der Hülse 12 können Wülste oder Vorsprünge angeformt sein, die zum Festhalten des rückwärtigen Abschnittes 26 der Drahtfeder dienen. Die Vorsprünge können als Außengewinde wirksam sein, das der Steigung der Windungen der Drahtfeder 20 entspricht.

Das Profil der Drahtfeder 20 enthält einen vorderen verjüngten Abschnitt 22 mit einem Übergang zu einem Abschnitt 24 des größten Durchmessers, ungefähr dem der Wandbohrung 32, und einen rückwärtigen Abschnitt 28 mit dem Anschlußende 26 zum Aufstekken oder Aufdrehen auf das Ende 18 der Hülse 12. Die sich durch alle radiale Schichten des Mörtels erstreckenden Windungen der Drahtfeder wirken als Bewehrung, so daß die Verankerung nach Abbinden der Mörtelmasse großen Auszugskräften standhält, die vom vorangehenden Ende 30 einer Holzschraube 38 aus über die Drahtfeder 20 und die Mörtelfüllung verteilt in die Wandbohrung abgetragen werden.

Der vordere verjüngte Abschnitt 22 der Drahtfeder dient der Verbindung mit einem Schraubkörper 38, der im Bereich des Bohrlocheingangs im Hülsenabschnitt 12 unterstützt und zentriert ist und einen Bauteil 35 an der Wand befestigt.

Fig. 1 bis 3 zeigen einen aus Kunststoff gefertigten Deckelkörper 10 mit einem zylindrischen Flansch, der am rückwärtigen Ende eines den Schraubkörper aufnehmenden Hülsenabschnittes 12 angeformt ist. Der Außenumfang des Flansches kann an der Stelle 16 geneigt bzw. zugespitzt verlaufen, so daß dieser Rand eine gewisse Elastizität besitzt, um sich durch sein Übermaß an Unregelmäßigkeiten der Wandbohrung 22 anzupassen. Auf dem Umfang des Hülsenabschnittes 12 sind mehrere Dichtungslamellen 14 angeformt, die sich radial auswärts bis auf den Nenndurchmesser der Wandbohrung erstrecken. Die Lamellen 14 dienen auch zur Zentrierung des Deckelkörpers 12 und können an ihrer Außenseite eine zur reibschlüssigen Halterung geeignete unregelmäßige Oberfläche aufweisen. Ihre Anzahl und ihre Erstreckungslänge auf dem Hülsenabschnitt sind nicht auf die gezeigte Ausführung beschränkt.

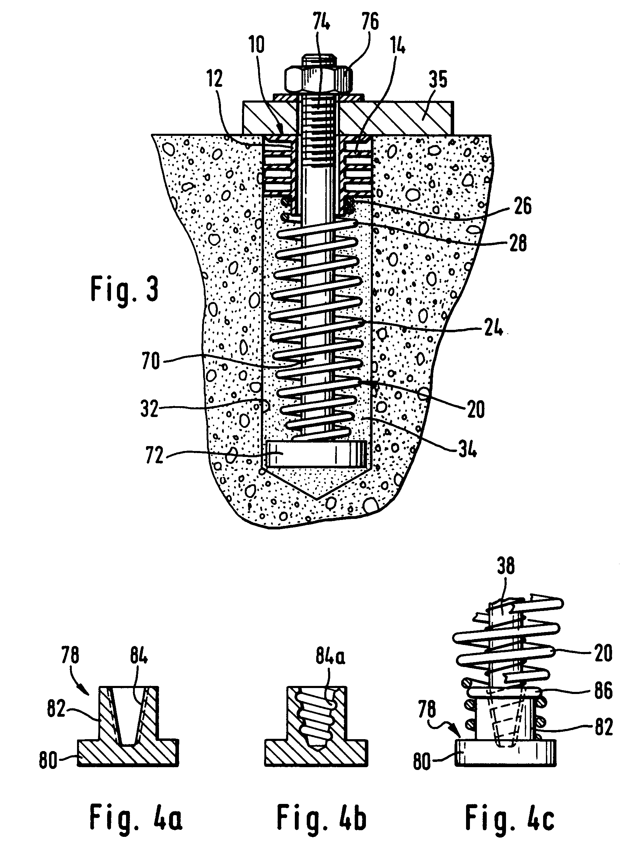

Beim Ausführungsbeispiel gemäß Fig. 3 tritt an die Stelle der Holzschraube 38 ein Setzbolzen 70, der am vorangehenden Ende seines Schaftes 70 in eine Gewindebohrung eines kreisförmigen oder mehreckigen Bolzenkopfes 72 eingeschraubt ist, dessen Außendurchmesser ungefähr dem der Wandbohrung 32 entspricht. Der Schaft trägt auch an seinem rückwärtigen Ende ein Außengewinde 74 und erstreckt sich durch den Hülsenabschnitt 12 des Deckelkörpers 10, durch den er in zentrierter Lage gehalten wird. Er erstreckt sich weiter durch das an der Wand zu befestigende Bauteil 35 und nimmt auf seinem Außengewinde 74 eine Schraubmutter 76 auf. In Übereinstimmung mit der Ausführungsform nach Fig. 1 kann die den Bolzen 70 umgebende Drahtfeder 20 mit einem erweiterten Mittelabschnitt 24 versehen sein, während ein rückwärtiger Abschnitt 26 auf dem freien Ende 18 des Hülsenabschnittes 12 durch Gewinde oder Vorsprünge festgehalten wird. Das vordere Ende der Feder 20 nähert sich dem Durchmesser des Bolzens 70 und kann an der Rückseite des Bolzenkopfes 72 anliegen.

Die Vorteile der in Fig. 1 und Fig. 3 gezeigten Ausführungsbeispiele lassen sich kombinieren, beispielsweise indem der Bolzen durch eine Holzschraube 38 ersetzt und in die Gewindeaufnahme 84 eines Kopfteils 78 (Fig. 4a) eingeschraubt und so die Auszugsfestigkeit erhöht wird. Entsprechend Fig. 4b kann das verjüngte vordere Ende 22 einer Feder wie in FIg. 1 in ein mit einer entsprechenden Gewindeaufnahme 84a versehenes Kopfteil 78 eingeschraubt werden. Das Kopfteil 78 ersetzt den Bolzenkopf 72 aus Fig. 3.

Die Gewindeaufnahme 84a ist dem gewindeähnlich verjüngten Vorderabschnitt 32 der Feder angepaßt. Gleichzeitig ist das verjüngte Federende innen zur Aufnahme und zur Führung des Schraubgewindes der Holzschraube 38 ausgebildet. Auf diese Weise entsteht eine bleibende Kraftübertragungsverbindung zwischen dem Schaft der Holzschraube 38 und dem Kopfteil 78. Das vordere Ende des Kopfteils 78 ist bis ungefähr auf den Durchmesser der Wandbohrung 32 vergrößert.

Obwohl nach Fig. 4a bis 4c das Kopfteil 78 am vorangehenden Ende mit einem Flansch 80 von kreisförmigen oder polygonalem Umfang und mit einem im Durchmesser verringerten Abschnitt 82 von beliebigem gleichbleibendem Querschnitt dargestellt ist, kann es auch von vorn nach hinten konisch verjüngt oder mit einer Mehrzahl von radialen Schultern versehen sein. Bei einer Holzschraube kann anstelle des üblichen Schraubenkopfes dort ein Feingewinde zur Aufnahme einer Schraubmutter vorgesehen sein.

Entsprechend Fig. 4c ist die Gewindespitze eines Schraubkörpers 38 in eine Aufnahme 84 des Kopfteiles 78 ähnlich Fig. 4a eingeschraubt ist. Das vordere verjüngte Ende der Feder 20 besitzt einen zylindrischen Abschnitt, mit dem es auf den zylindrischen Anschlußabschnitt 82 des Kopfteils mit Klemmsitz festgehalten oder über einen Vorsprung 86 geschoben oder auf ein Außengewinde aufgeschraubt wird.

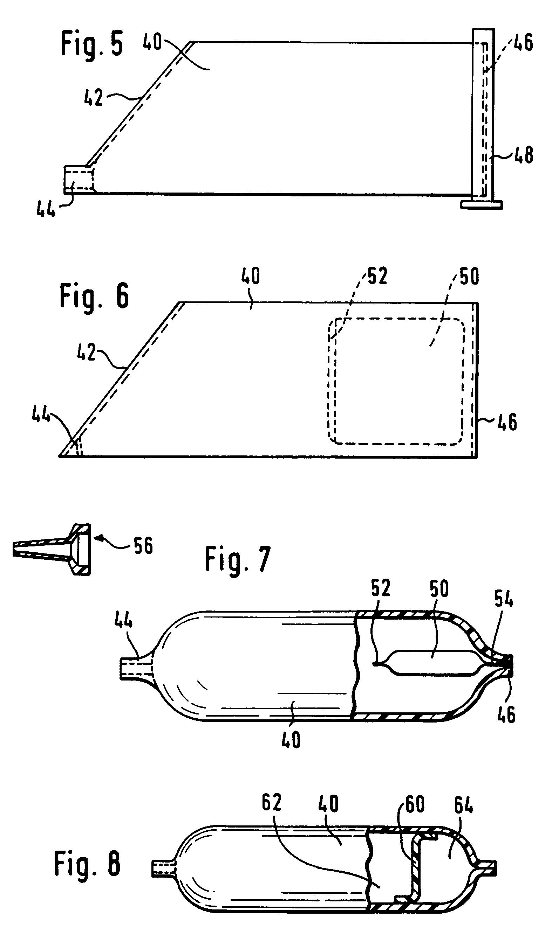

Als Beispiel eines Mörtel-Auspreßgerätes zeigt Fig. 5 einen tubenähnlichen Behälter 40 aus Weichplastikschlauch, der an einer Seite 42 mit einem eingeschweißten Öffnungsstutzen 44 versehen ist. Der Öffnungsstutzen 44 ist durch eine Schraubkappe, einen abschneidbaren Deckel oder einen eingedrückten Stopfen verschlossen. Die offene Behälterseite 46 wird durch eine Klemmeinrichtung 48 zusammengehalten und wie eine Tube zusammengerollt, wenn der Inhalt in eine Wandbohrung injiziert wird. Die Seite 42 des Behälters 40 kann durch eine Schweißnaht geschlossen sein, von der bei Gebrauch die Ecke abgeschnitten und eine Öffnung geschaffen wird.

Der Behälter 40 ist normalerweise mit trockener Mörtelmasse gefüllt. Zum Gebrauch wird die Klemmeinrichtung 18 abgenommen, eine Härterkomponente zugemischt und danach der Schlauchbehälter 40 wieder geschlosse, wobei dessen Elastizität und eine nicht zu pralle Füllung sicherstellen, daß die zum Durchmischen notwendigen Walkbewegungen über den gesamten Behälterumfang durchgeführt werden können. Zum Injizieren der Mörtelmasse wird der Behälter mit seiner Öffnung 44 an das Bohrloch gehalten und im erforderlichen Umfang dort hinein entleert. Gemäß einer nicht gezeigten Variante kann außer der trockenen Mörtelmasse im Schlauchbehälter 40 ein sich durch äußere Einwirkung öffnender Beutel mit Wasser oder dgl. enthalten sein, so daß die einmal aufgesetzte Klemmeinrichtung 48 nicht abgenommen zu werden braucht.

Das Beispiel gemäß Fig. 6 unterscheidet sich von demjenigen nach Fig. 3 dadurch, daß der Schlauchbehälter 40 an beiden Endseiten 42 und 46 durch Schweißung verschlossen ist und daß sich in seinem Innern außer der trockenen Mörtelmasse ein zweiter Behälter 50 für die zweite Komponente des Mörtels befindet. Der zweite Behälter 50 kann frei eingelegt oder z. B. mit einem Rand an der Folie des Schlauchbehälters 40 befestigt sein; er ist mit einer Sollbruchstelle oder einer Aufreißnaht 52 versehen, die bei Ausübung von äußerem Druck reißt, ohne daß dabei der äußere Schlauchbehälter 40 zerstört wird.

Der waagerechte Schnitt gemäß Fig. 7 zeigt einen Portionsbehälter ähnlich der Art wie in Fig. 4, bei dem der innere kleinere Beutel 50 mit seinem einen Rand 54 am Rand 48 des äußeren Schlauchbehälters 40 befestigt, d. h. mit diesem verschweißt ist. Entsprechend Fig. 3 kann am gegenüberliegenden Ende des Schlauchbehälters 40 ein Öffnungsstutzen 44 angeformt oder eingeschweißt sein, der zum Gebrauch der Öffnung aufgeschnitten und mit einer aufschraubbaren oder aufsteckbaren Düse 56 versehen wird. Der Düsenkörper 56 kann auch in der aufgeschnittenen Öffnung beim Schlauchbehälter 40 gemäß Fig. 6 angewendet werden, indem er mit seinem erweiterten, in die Öffnung eingesteckten und am Öffnungsrand mit einem nicht gezeigten übergeschobenen äußeren Klemmring oder auch anders befestigt wird.

Bei der Variante gemäß Fig. 8 befindet sich im Schlauchbehälter 40 eine Trennwand 60, die ein größeres Abteil 62 und ein kleineres Abteil 64 trennt und eine von außen betätigbare Aufreißöffnung oder Aufreißnaht erhält, um die Komponenten der beiden Kammern miteinander vermischen zu können.

## Patentansprüche

1. Mörtelankersystem zum Befestigen von Bauteilen an einer Leichtbaustoffe enthaltende Wand, bei dem in eine Wandbohrung (32) eine Verankerungseinrichtung für einen Schraubkörper (38) eingeführt ist, die einen am Bohrlocheingang angeordneten Dekkelkörper (10) mit einem in die Wandbohrung (32) ragenden Hülsenabschnitt (12) aufweist, dessen im Deckelkörper mündender Eingang eine Kupplung für das Düsenstück (56) eines Mörtel-Auspreßgerätes bildet,
**dadurch gekennzeichnet,**
daß das vorangehende Ende (18) des Hülsenabschnittes (12) als Halter für das rückwärtige Ende (26) einer gewundenen Drahtfeder (20) ausgebildet ist, die von einem sich über eine wesentliche Länge der Wandbohrung (32) erstreckenden und zwecks unbehinderter Mörtelausbreitung aufgeweiteten Bereich (24) aus in Richtung auf ihr vorderes Ende (22) verjüngt ist,
und daß der Hülsenabschnitt (12) zur zentrierenden Führung des Schraubkörpers (38) im Bereich des Bohrlocheinganges und das vordere Federende (22) zur Führung und Verbindung mit dem vorangehenden Ende des Schraubkörpers (38) vorgesehen ist.

2. Mörtelankersystem nach Anspruch 1, bei dem der Umfang des vorangehenden Endes (18) des Hülsenabschnittes (12) einen oder mehrere Vorsprünge zum Festhalten der Drahtfeder (20) aufweist.

3. Mörtelankersystem nach Anspruch 1 oder 2, bei dem der Dekkelkörper (10) einen am rückwärtigen Ende des Hülsenabschnittes (12) angeformten zylindrischen Flansch aufweist, der mit einem sich an die Wandbohrung (32) anpassenden, nachgiebigen Rand (16) mit reduzierter Wandstärke versehen ist.

4. Mörtelankersystem nach einem der vorhergehenden Ansprüche, bei dem als zusätzliche Abdichtung der Wandbohrung vor dem zylindrischen Flansch auf dem Umfang des Hülsenabschnittes (12) Ringlamellen (14) angeformt sind.

5. Mörtelankersystem nach einem der vorhergehenden Ansprüche, bei dem der Hülsenabschnitt (12) des Deckelkörpers (10) einen konisch erweiterten Eingang als Kupplungsabschnitt für das Mörtel-Auspreßgerät enthält.

6. Mörtelankersystem nach einem der vorhergehenden Ansprüche, bei dem der Durchmesser der Drahtfeder (20) von ihrem verjüngten, vorangehenden Ende aus bis ungefähr auf den Durchmesser der Wandbohrung vergrößert ist und am hinteren Ende bis auf den Hülsendurchmesser verringert ist.

7. Mörtelankersystem nach einem der Ansprüche 1 bis 5, bei dem die Drahtfeder (20) einen vorderen Abschnitt (24) größten Durchmessers aufweist und von dort allmählich in Richtung auf ihr mit dem Hülsenabschnitt (12) verbindbares rückwärtiges Ende verjüngt ist.

8. Mörtelankersystem nach einem der vorhergehenden Ansprüche, bei dem der Schraubkörper aus einer an ihrem vorderen Ende (30) spitz zulaufenden Holzschraube (38) besteht, die in das vorangehende verjüngte Federende (22) einschraubbar ist.

9. Mörtelankersystem nach einem der vorhergehenden Ansprüche, bei dem das vorangehende Ende des Schraubkörpers (38; 70) und/oder der Drahtfeder (20) mit einem metallischen Kopfteil (78) verbindbar ist, das einen im wesentlichen dem Wandbohrungsdurchmesser entsprechenden vorderen Ringabschnitt (80) sowie einen im Durchmesser abgesetzten Anschlußabschnitt (82) aufweist.

10. Mörtelankersystem nach Anspruch 9, bei dem das Kopfteil (78) eine an das vordere Ende der Holzschraube (38) bzw. an das verjüngte Federende angepaßte Aufnahme (84; 84a) mit Innengewinde enthält.

11. Mörtelankersystem nach Anspruch 9 oder 10, bei dem der Anschlußabschnitt (82) des Kopfteils (78) ein Außengewinde oder Vorsprünge (86) aufweist, auf die das vordere Federende aufgeschraubt oder aufgedrückt wird.

12. Mörtelankersystem nach einem oder mehreren der Ansprüche 1 bis 7, 9 oder 11, bei dem der Schraubkörper ein mit einem Kopfteil (72; 78) verschraubbarer gewindetragender Bolzen (70) ist.

13. Mörtel-Auspreßgerät für ein Mörtelankersystem nach einem der vorhergehenden Ansprüche, beim dem
- ein im wesentlichen aus einer Schlauchfolie oder aus einem Weichplastikschlauch bestehender Außenbehälter (40) eine erste Komponente einer aus einem Zweikomponentensystem bestehenden Mörtelmasse enthält und an beiden Schlauchenden (42, 46) geschlossen ist,
- im Außenbehälter (40) ein mit der zweiten Komponente gefüllter Innenbehälter (50; 64) angeordnet ist, der durch äußere Druckeinwirkung z.B. auf eine Sollbruchstelle oder Aufreißnaht soweit zerstörbar ist, daß beide Komponenten in Verbindung treten und vermischbar sind,
- und eine Behälterseite eine für den Auspreßvorgang herstellbare Öffnung (44) enthält, die mit dem Hülsenabschnittes des Deckelkörpers (10) kuppelbar ist.

14. Mörtel-Auspreßgerät nach Anspruch 13, bei dem die Öffnung (44) des Außenbehälters (40) durch eine an seinem Rand vorgesehene Aufreißnaht gebildet ist oder aus einem in den Außenbehälter eingeschweißten oder angeformten Öffnungsstutzen besteht, der mit Außengewinde für eine Verschlußkappe versehen sein kann.

15. Mörtel-Auspreßgerät nach Anspruch 14, bei dem der mit dem Außenbehälter (40) verbundene Öffnungsstutzen ungefähr in der Verlängerung der einen Behälterlängsseite angeordnet ist und dadurch die die Vermischung des Zweikomponentensystems begünstigende Behälterelastizität und ohne Totraumbereiche erhalten bleibt.

16. Mörtel-Auspreßgerät nach einem der Ansprüche 13 bis 15, bei dem das der Öffnung (44) entgegengesetzte Ende des Außenbehälters (40) offen und durch eine abnehmbare Klammer (48) zum Transport noch nicht vermischter oder zum Auspressen vermischter Mörtelmasse verschließbar ist.

## Claims

1. Mortar-anchored system for fastening construction components to a wall including lightweight masonry, wherein an anchoring device for a threaded member (38) introduced into a wallbore (32) comprises a lid member (10) disposed at the entrance of the borehole and having a bush portion (12) extending into the wallbore and its entrance opening within the lid member to form a coupling for the nozzle member (45) of a mortar injecting device,
characterized
in that the leading end (18) of the bush portion (12) is designed as support for the rear end (26) of a coiled wire spring (20), which from a zone (24) widened for unhindered spreading of mortar and extending over a substantial length of the wallbore (32) tapers towards its front end (22),
and in that the bush portion (12) is provided for centering the threaded member (38) in the zone of the entrance of the wallbore, while the front end (22) of the spring is provided for guiding and linking with the leading end of the threaded member (38).

2. Mortar-anchored system as in claim 1, wherein the circumference of the leading end (18) of the bush portion (12) has one or more projections for securing the wire spring (20).

3. Mortar-anchored, system as in claim 1 or 2, wherein the lid member (10) has a cylindrical flange originating from the rear end of the bush portion (12) and being provided with a resilient rim (16) of reduced wall thickness for fitting into the wallbore.

4. Mortar-anchored system as in one of the preceding claims, wherein annular fins (14) originate from the periphery of the bush portion (12) in front of the cylindrical flange as additional sealing of the wallbore.

5. Mortar-anchored system as in one of the preceding claims, wherein the bush portion (12) of the lid member (10) has a conically flaring entrance as coupling portion for the mortar injection device.

6. Mortar-anchored system as in one of the preceding claims, wherein the diameter of the wire spring (20), starting at its tapered leading end becomes enlarged to about the diameter of the wallbore, and is reduced at its rear end down to the bush diameter.

7. Mortar-anchored system as in one of the claims 1 to 5, wherein the wire spring (20) has a front portion (24) of the largest diameter, from where the spring gradually tapers towards its rear end adapted for being secured to the bush portion (12).

8. Mortar-anchored system as in one of the preceding claims, wherein the threaded member consists of a wood screw (38) sharply tapering at its leading end (30) and adapted for being threaded into the tapered leading end (22) of the spring.

9. Mortar-anchored system as in one of the preceding claims, wherein the leading end of the threaded member (38; 70) and/or of the wire spring (20) can be connected to a metallic headpiece (78) comprising a leading annular portion (80), which substantially corresponds to the diameter of the wallbore, and an offset connecting portion (82) of reduced diameter.

10. Mortar-anchored system as in claim 9, wherein the headpiece (78) includes a threaded bore (84; 84a) for accommodating the front end of the wood screw (38) or the tapered front end of the spring, respectivelly.

11. Mortar-anchored system as in claim 9 or 10, wherein the connecting portion (82) of the headpiece (78) is provided with an external thread or with projections (86), onto which the front end of the spring is threaded or impressed.

12. Mortar-anchored system as in one or more of claims 1 to 7, 9, or 11, wherein the threaded member is a threaded bolt (70) adapted for threaded engagement with a headpiece (72; 78).

13. Mortar injecting device for a mortar-anchored system as in one of the preceding claims, wherein
- an external container (40) substantially consisting of a hose-foil or hose made from soft plastik contains a first component of a mortar mass consisting of a binary compound system, and is closed at both ends of the hose (42, 46),
- in the external container (40) is disposed an internal container (50; 64) filled with the second component and adapted for being destroyed by external pressure on a rated rupture spot or a tear-open seam such that both components may combine and can be mixed,
- and one container side includes an aperture (44) adapted for being prepared for injection and for can being coupled to the entrance of the lid member (10).

14. Mortar injecting device as in claim 13, wherein the aperture (44) of the external container (40) is formed by a tear-open seam present at its edge, or by an aperture-stub integrated or welded into the external container and being equipped with an outer thread for a seal-cap.

15. Mortar injecting device as in claim 14, wherein the aperture-stub connected to the external container (40) is disposed approximately in the extension of one of the container lengthwise sides, whereby the container elasticity favoring the mixing of the binary system is retained in the absence of dead spaces.

16. Mortar injecting device as one of claims 13 to 15, wherein the end of the external container (40) opposite the aperture (44) is open and can be sealed by a detachable clamp (48) in order to allow transportation of still unmixed compound mass or to inject the mixed compound mass.

## Revendications

1. Système d'ancrage au mortier, pour fixer des éléments de construction sur une paroi comportant un matériau léger de construction, dans le cas duquel un dispositif d'ancrage pour un corps de vis (38) est introduit dans un trou de la paroi (32), dispositif qui présente un corps de couvercle (10) disposé à l'entrée du trou et comportant une section de douille (12) pénétrant dans le trou de la paroi (32), et dont l'entrée débouchant dans le corps du couvercle sert d'accouplement pour la pièce constituant la buse (56) d'un appareil d'injection de mortier,
caractérisé en ce que
- l'extrémité, située à l'avant, (18) de la section de douille (12) est réalisée sous la forme d'un support pour l'extrémité côté arrière (26) d'un ressort à boudin (20), enroulé en spirale, qui se rétrécit vers son extrémité avant (22) depuis sa zone (24), qui s'étend sur une longueur importante du trou de la paroi (32), et qui est plus large pour permettre au mortier de se répartir sans contrainte,
- et en ce que la section de douille (12) est prévue pour guider et centrer le corps de vis (38) dans la zone de l'entrée du trou de foration, et en ce que l'extrémité avant (22) du ressort est prévue pour le guidage et la liaison avec l'extrémité avant du corps de vis (38).

2. Système d'ancrage au mortier suivant la revendication 1, pour lequel la périphérie de l'extrémité avant (18) de la section de douille (12) présente une ou plusieurs saillies pour maintenir le ressort à boudin (20).

3. Système d'ancrage au mortier suivant la revendication 1 ou la revendication 2, pour lequel le corps de couvercle (10) présente une bride cylindrique s'adaptant par sa forme sur l'extrémité arrière de la section de douille (12) et munie d'une bordure élastique, s'ajustant sur le trou de la paroi (32) et comportant une épaisseur de paroi diminuée.

4. Système d'ancrage au mortier suivant l'une quelconque ou plusieurs des revendications précédentes, pour lequel, pour assurer une étanchéité supplémentaire du trou de la paroi, des lamelles annulaires (14) sont formées sur la périphérie de la section de douille (12), en avant de la bride cylindrique.

5. Système d'ancrage au mortier suivant l'une quelconque des revendications précédentes, pour lequel la section de douille (12) du corps de couvercle (10) comporte une entrée s'élargissant en forme de cône, comme section d'accouplement pour l'appareil d'injection de mortier.

6. Système d'ancrage au mortier suivant l'une quelconque des revendications précédentes, pour lequel le diamètre du ressort à boudin (20) s'agrandit, depuis son extrémité amincie avant jusqu'environ au diamètre du trou de la paroi, et se réduit, à l'extrémité arrière, jusqu'au diamètre de la douille.

7. Système d'ancrage au mortier suivant l'une quelconque des revendications 1 à 5, pour lequel le ressort à boudin (20) présente une section avant (24) de diamètre plus grand et, de là, se réduit de façon continue, en allant vers son extrémité arrière, se raccordant avec la section de douille (12).

8. Système d'ancrage au mortier suivant l'une quelconque des revendications précédentes, pour lequel le corps de vis est constitué d'une vis à bois (38) en forme de pointe à son extrémité avant (30), que l'on peut visser dans l'extrémité (22) avant du ressort.

9. Système d'ancrage au mortier suivant l'une quelconque des revendications précédentes, pour lequel l'extrémité avant (22) du corps de vis (38; 70) et/ou du ressort à boudin (20) peut être reliée à une pièce de tête (78) mécanique présentant une section annulaire avant (80), correspondant essentiellement au diamètre du trou de la paroi, ainsi qu'une section de raccordement (82) d'un diamètre en retrait.

10. Système d'ancrage au mortier suivant la revendication 9, pour lequel la pièce de tête (78) comporte un logement (84; 84a), comportant un filetage intérieur et adapté pour recevoir respectivement l'extrémité avant de la vis à bois (38) et l'extrémité amincie du ressort.

11. Système d'ancrage au mortier suivant la revendication 9 ou la revendication 10, pour lequel la section de raccordement (82) de la pièce de tête (78) présente un filetage extérieur ou des saillies (86) sur lequel vient se visser ou se presser l'extrémité avant du ressort.

12. Système d'ancrage au mortier suivant l'une quelconque des revendications 1 à 7, 9 ou 11, pour lequel le corps de vis (38) est un bouton (70) portant un filetage pouvant se visser sur une pièce de tête (72; 78).

13. Appareil d'injection de mortier pour un système d'ancrage au mortier suivant l'une quelconque des revendications précédentes, dans le cas duquel
- un récipient extérieur (40), essentiellement constitué d'une feuille en forme de tuyau flexible ou d'un tuyau flexible en plastique mou, contient un premier composant d'une masse de mortier constituée d'un système de deux composants et est fermé aux deux extrémités (42, 46) du tuyau flexible.
- dans le récipient extérieur (40), est disposé un récipient intérieur (50; 64) contenant le deuxième composant, récipient intérieur qui peut être rompu sous l'effet d'une pression extérieure, par exemple sur un point de rupture prévu ou une ligne de rupture, de telle façon que les deux composants se réunissent et puissent se mélanger.
- et un côté du récipient comporte une ouverture (44) pouvant être réalisée pour l'opération d'éjection, ouverture qui peut être raccordée avec la section de douille du corps de couvercle (10).

14. Appareil d'injection de mortier suivant la revendication 13, pour lequel l'ouverture (44) du récipient extérieur (40) est réalisée par une ligne de rupture programmée, prévue sur son bord, ou est constituée d'une tubulure soudée ou formée dans le récipient extérieur, pouvant être munie d'un filetage extérieur pour un chapeau de fermeture.

15. Appareil d'injection de mortier suivant la revendication 14, pour lequel la tubulure de l'ouverture raccordée au récipient extérieur (40) est disposée sensiblement dans le prolongement de l'un des côtés longitudinaux du récipient, et, de ce fait, l'élasticité du récipient provoquant le mélange du système de deux composants est maintenue et ne présente pas de volume mort.

16. Appareil d'injection de mortier suivant l'une quelconque des revendications 13 à 15, pour lequel l'extrémité du récipient extérieur (40) opposée à l'ouverture (44) est ouverte et peut être fermée au moyen d'une pince (48) démontable, pour pouvoir transporter une masse de mortier non encore mélangée, ou pour pouvoir l'injecter quand elle a été déjà mélangée.
